# EUROPEAN PATENT APPLICATION

(11) **EP 3 978 125 A1**
(43) Date of publication of application: **06.04.2022**
(21) Application number: 21199718.4
(22) Date of filing: 29.09.2021
(51) Int. Cl.: B01L 3/00, B01D 57/02, B01L 7/00, C12Q 1/68, G01N 27/447

(54) **NUCLEIC ACID DETECTION KIT AND NUCLEIC ACID DETECTION DEVICE**

(30) Priority: 30.09.2020 US 202063085368 P; 30.09.2020 US 202063085385 P; 19.01.2021 US 202163138974 P; 09.06.2021 CN 202110652134
(71) Applicant: iCare Diagnostics International Co. Ltd., New Taipei 236 (TW)
(72) Inventor: WANG, YU-MIN, San Jose, 95131 (US); TSAI, CHIA-HUA, 236 New Taipei (TW); HUANG, CHUAN-CI, 236 New Taipei (TW)
(74) Representative: Zaboliene, Reda

(57) **Abstract**

A nucleic acid detection kit (100) includes a detection chip (2), an electrophoresis box (3), and a barrier unit (8). The detection chip (2) includes a channel (5) and an outlet (51). The outlet (51) is connected to the channel (5). The temperature-dependent barrier unit (8) may be in a first state or a second state. The barrier unit (8) is disposed on a side of the outlet (51) close to the channel (5) when the barrier unit (8) is in the first state, so that the channel (5) is disconnected from the electrophoresis box (3). The barrier unit (8) is away from the outlet (51) when the barrier unit (8) is in the second state, so that the channel (5) is connected to the electrophoresis box (3). A nucleic acid detection device (200) including the nucleic acid detection kit (100) is also disclosed. The nucleic acid detection device (200) has a simple structure, which is portable, flexible, and convenient, and can be used at home.

## Description

### FIELD

The subject matter relates to nucleic acid detection devices, and more particularly, to a nucleic acid detection kit and a nucleic acid detection device with the nucleic acid detection kit.

### BACKGROUND

Molecular diagnosis, morphological detection, and immunological detection are mostly carried out in laboratories. The detection process includes performing a polymerase chain reaction (PCR) amplification reaction in a large or medium-sized detection equipment to acquire an amplified product. Then, the amplified product is manually transferred to an electrophoretic process equipment for an electrophoretic process. Finally, an electrophoretic process result is manually transferred to a fluorescence analyzer to obtain a fluorescence image. However, such detection process is time-consuming, inefficient, and inflexible, and the detection device is not portable. The detection cannot be carried out anytime and anywhere.

### SUMMARY

To overcome the above shortcomings, the present disclosure provides a nucleic acid detection kit, including a detection chip, an electrophoresis box, and a barrier unit. The detection chip includes a first cover plate, a spacer layer, and a second cover plate, two opposite surfaces of the spacer layer are respectively in contact with the first cover plate and the second cover plate, the first cover plate, the spacer layer, and the second cover plate cooperatively define a channel, the first cover plate defines an outlet, the outlet is connected to the channel. The barrier unit is in a first state or a second state, the barrier unit is disposed on a side of the outlet close to the channel when the barrier unit is in the first state, so that the channel is disconnected from the electrophoresis box. the barrier unit is away from the outlet when the barrier unit is in the second state, so that the channel is connected to the electrophoresis box.

In some embodiments, the electrophoresis box includes a connection unit, the channel is connected to the electrophoresis box through the connection unit, the connection unit includes a first end, and the first end extends into the channel through the outlet, the barrier unit covers the first end when the barrier unit is in the first state.

In some embodiments, the barrier unit including a blocking portion and a sealing portion, wherein when the barrier unit is in the first state, the blocking portion is disposed in the channel, the sealing portion passes through the first end and extends into the connection unit.

In some embodiments, the barrier unit is in the first state in a temperature ranging from 0 °C to 35 °C, the first state is a solid state. The barrier unit is in the second state in a temperature higher than 35 °C, the second state is a molten state.

In some embodiments, the barrier unit is a waxy substance selected from a group consisting of paraffin, silicone wax, plant wax, white wax, and any combination thereof.

In some embodiments, an amount of the waxy substance in the barrier unit is larger than or equals to 60 wt.%.

In some embodiments, the electrophoresis box further includes an electrophoretic body, a gel medium disposed in the electrophoretic body, a liquid injection slot disposed on an end of the gel medium, the connection unit further includes a second end away from the first end, the second end extends into the liquid injection slot.

In some embodiments, the electrophoretic body defines an electrophoretic groove, the first cover plate is disposed on an opening of the electrophoretic groove.

In some embodiments, a configuration of the first end includes a planar surface or at least one inclined plane, the planar surface is parallel to an extension direction of the channel, and an angle between each of the at least one inclined plane and a central axis of the connection unit ranges from 45 degrees to 60 degrees.

The present disclosure also provides a nucleic acid detection device, including the above nucleic acid detection kit and a host. A mounting groove is disposed on the host, the nucleic acid detection kit is detachably disposed in the mounting groove.

With the above configuration, the nucleic acid detection kit can integrate the PCR amplification reaction and the electrophoretic process of nucleic acid into in a single piece of equipment. Thus, the nucleic acid detection kit has a simple structure, which is portable, flexible, and convenient, and can be used at home. Due to the barrier unit being disposed between the detection chip and the electrophoresis box, mixing of the silicone oil in the channel and the wetting liquid in the electrophoresis box is prevented, and the reliability of the nucleic acid detection kit is improved.

### BRIEF DESCRIPTION OF THE DRAWINGS

Implementations of the present technology will now be described, by way of example only, with reference to the attached figures.
FIG. 1 is a front, top perspective view of an embodiment of a nucleic acid detection kit according to the present disclosure.
FIG. 2 is a rear, bottom perspective view of an embodiment of a nucleic acid detection kit according to the present disclosure.
FIG. 3 is an exploded diagrammatic view of an embodiment of a nucleic acid detection kit according to the present disclosure.
FIG. 4 is an exploded diagrammatic view of an embodiment of a nucleic acid detection kit without a kit body according to the present disclosure.
FIG. 5 is a cross-sectional view of an embodiment of a detection chip in the kit according to the present disclosure.
FIG. 6 is a diagrammatic view of an embodiment of a driving circuit of a detection chip according to the present disclosure.
FIG. 7 is a diagrammatic view of an embodiment of an electrophoresis box according to the present disclosure.
FIG. 8 is a cross-sectional view of an embodiment of a detection chip and an electrophoresis box according to the present disclosure.
FIG. 9 is a cross-sectional view of another embodiment of a detection chip and an electrophoresis box according to the present disclosure.
FIG. 10 is a cross-sectional view of another embodiment of a detection chip and an electrophoresis box according to the present disclosure.
FIG. 11 is a cross-sectional view of an embodiment of a barrier in a channel of the kit according to the present disclosure.
FIG. 12 is a cross-sectional view of another embodiment of a barrier in a channel of the kit according to the present disclosure.
FIG. 13 is a diagrammatic view of an embodiment of a nucleic acid detection device according to the present disclosure.

### DETAILED DESCRIPTION

It will be appreciated that for simplicity and clarity of illustration, where appropriate, reference numerals have been repeated among the different figures to indicate corresponding or analogous components. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts may be exaggerated to better illustrate details and features of the present disclosure.

The term "comprising," when utilized, means "including, but not necessarily limited to"; it specifically indicates open-ended inclusion or membership in the so-described combination, group, series, and the like.

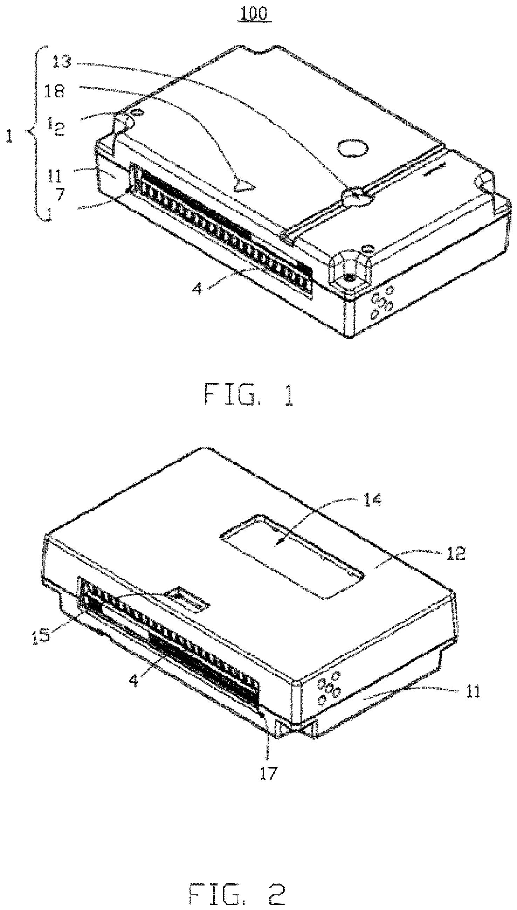

FIGS. 1, and 3 to 5, illustrate a nucleic acid detection kit 100, which includes a kit body 1, a detection chip 2, and an electrophoresis box 3, and a connector 4. The detection chip 2 and the electrophoresis box 3 connected together are arranged in the kit body 1. The detection chip 2 and the electrophoresis box 3 are electrically connected to the connector 4. The detection chip 2 is configured to perform a PCR amplification reaction. The electrophoresis box 3 is configured to perform an electrophoretic process. The detection chip 2 includes a first cover plate 21, a spacer layer 22, and a second cover plate 23. Opposite surfaces of the spacer layer 22 are in contact with the first cover plate 21 and the second cover plate 23. The first cover plate 21, the spacer layer 22, and the second cover plate 23 cooperatively define a channel 5. The channel 5 is configured to carry a sample of testable material in solution ("solution") to be detected. The solution in the channel 5 is in a form of microbead "a". The microbead "a" may undergo the PCR amplification reaction to obtain a mixer microbead "b". The mixer microbead "b" enters to the electrophoresis box 3 to undergo the electrophoretic process. An image collection unit (not shown) acquires an image of fluorescent of fluorescent in the electrophoresis box 3. The nucleic acid detection kit 100 integrates with the detection chip 2 and the electrophoresis box 3, which has a small size, and is suitable for a portable use. After the PCR amplification reaction is completed, the electrophoretic process is carried out automatically. The two processes are performed in a single piece of equipment, and the sampling is accurately controlled. Thus, the detection process is efficient and flexible.

Referring to FIGS. 1 to 5, the kit body 1 includes a first housing 11, a second housing 12, a sampling port 13 disposed on the second housing 12, and a detection window 14 disposed on the first housing 11. The first housing 11 and the second housing 12 are connected together to define a receiving cavity (not shown in the figures). The detection chip 2, the electrophoresis box 3, and the connector 4 are received in the receiving cavity. The sampling port 13, through which the microbead "a" can be added into the detection chip 2, corresponds to the detection chip 2. The detection window 14 corresponds to the electrophoresis box 3, so that the image collection unit can collect the image of fluorescent of the electrophoresis box 3 through the detection window 14.

In an embodiment, the first housing 11 and the second housing 12 are clamped together. The first housing 11 and the second housing 12 are further fastened together by screws to increase a connection strength therebetween.

In an embodiment, referring to FIGS. 1 to 3, a sidewall of the kit body 1 defines an opening 17. The opening 17 is configured for installation of a connector 4, which is electrically connected to an external power supply. The connector 4 is received in the receiving cavity, and exposed through the opening 17 to facilitate the electrical connection between the connector 4 and the external power supply.

In an embodiment, referring to FIG. 2, the first housing 11 further defines a card slot 15. Referring to FIG. 14, a clamping structure (not shown) on a detection kit mounting groove 202 of a nucleic acid detection device 200 is configured to enter the card slot 15 to clamp the nucleic acid detection kit 100.

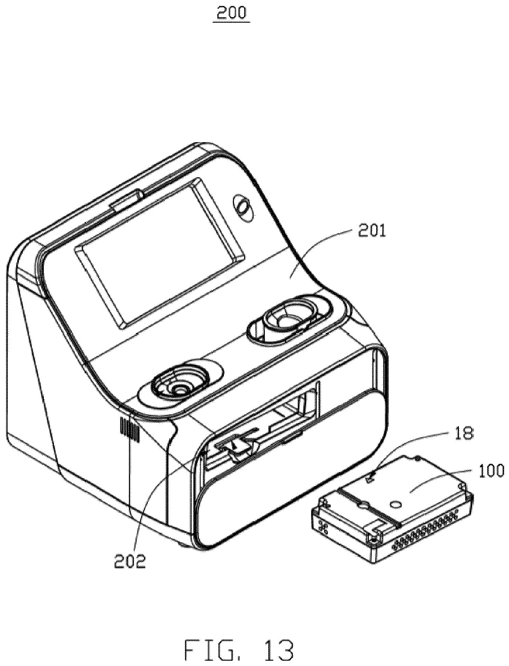

In an embodiment, referring to FIG. 1, an indication mark 18 (such as an arrow) is disposed on a side of the second housing 12 away from the receiving cavity, Referring to FIG. 13, the indication mark 18 indicates insertion direction of the nucleic acid detection kit 100 into the nucleic acid detection device 200 to avoid wrong insertion.

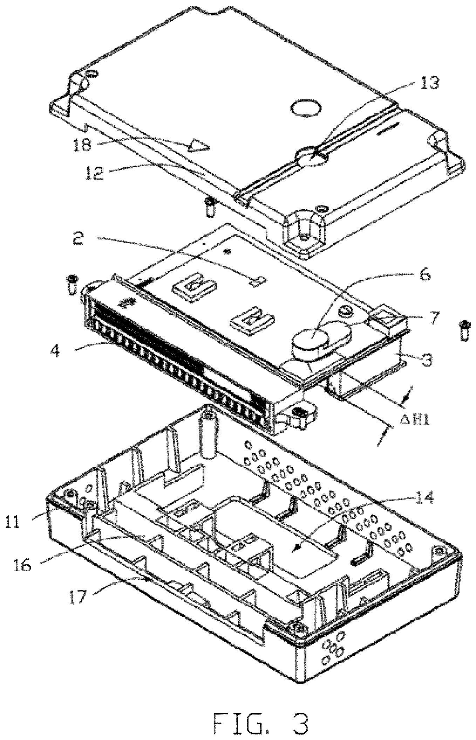

In an embodiment, referring to FIG. 3, several support structures 16 are disposed in the kit body 1. Due to thicknesses of the detection chip 2, the electrophoresis box 3, and the connector 4 being different, the support structures 16 with different heights are disposed to support the detection chip 2, the electrophoresis box 3, and the connector 4 in the kit body 1, improving the connection stability of the nucleic acid detection kit 100.

In an embodiment, the kit body 1 may be made of, but is not limited to, plastic.

In an embodiment, the support structures 16, the first housing 11, and the second housing 12 are an integrated structure.

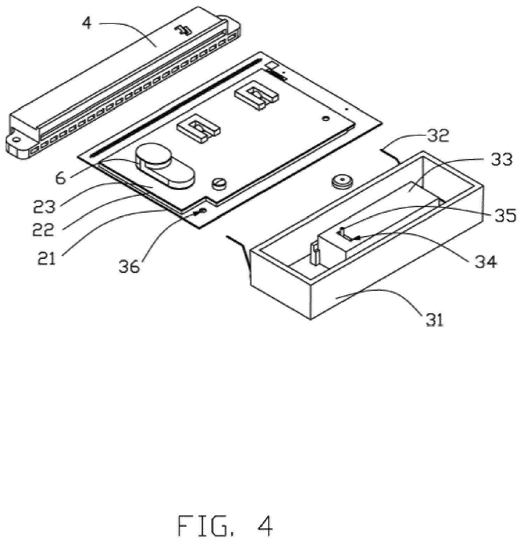

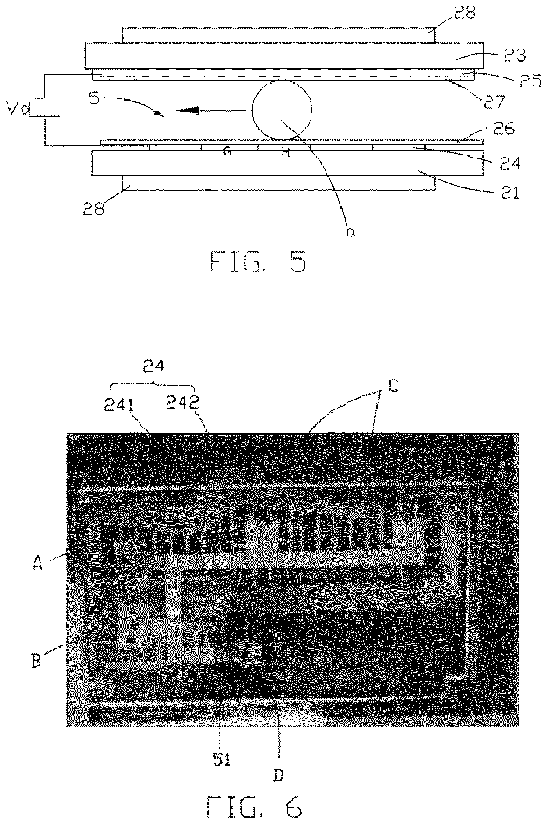

Referring to FIGS. 4 and 5, the detection chip 2 further includes a driving circuit 24 disposed on a surface of the first cover plate 21 close to the second cover plate 23, a first dielectric layer 26 disposed on a side of the driving circuit 24 close to the second cover plate 23, a conductive layer 25 disposed on a surface of the second cover plate 23 close to the first cover plate 21, and a second dielectric layer 27 disposed on a side of the conductive layer 25 close to the first cover plate 21. The driving circuit 24 and the conductive layer 25 are electrically connected to the connector 4, The microbead "a" can be driven to move along a moving path in the channel 5 by energizing or de-energizing a circuit between the driving circuit 24 and the conductive layer 25.

Referring to FIGS. 1, 5 and 6, the driving circuit 24 includes a plurality of driving electrodes 241 disposed in an array and a plurality of control electrodes 242. Each of the driving electrodes 241 is electrically connected to a corresponding control electrode 242. The control electrodes 242 are further electrically connected to the connector 4. In an embodiment, the driving circuit 24 is a thin film transistor (TFT) driving circuit The microbead "a" is conductive to an extent, which can be driven by circuits between the driving electrodes 241 and the conductive layer 25 to move in the channel 5 due to dielectric wetting principle (EWOD). Due to the EWOD principle, one of the circuits between one of the driving electrodes 241 and the conductive layer 25 can be selectively energized to change wetting characteristics between the microbead "a" and the first dielectric layer 26 and between the microbead "a" and the second dielectric layer 27, so as to control the microbead "a" to move along the moving path. Referring to FIG. 6, the driving electrodes 241 include a driving electrode "I", a driving electrode "H", and a driving electrode "G". The microbead "a" moves on the driving electrode "I", the driving electrode "H", and the driving electrode "G". When the microbead "a" is on the driving electrode "H", a voltage "Vd" is applied between the driving electrode "G" and the conductive layer 25, and the driving electrode "H" is disconnected from the conductive layer 25. At this time, the wetting characteristics between the microbead "a" and the first dielectric layer 26, and between the microbead "a" and the second dielectric layer 27 are changed, so that a liquid-solid contact angle between the driving electrode "H" and microbead "a" becomes larger, and a liquid-solid contact angle between the driving electrode "G" and microbead "a" becomes smaller, to promote the movement of the microbead "a" from the driving electrode "H" to the driving electrode "G".

In an embodiment, the first dielectric layer 26 and the second dielectric layer 27 are insulating and hydrophobic layers. On the one hand, the first dielectric layer 26 and the second dielectric layer 27 have the characteristics of insulation and hydrophilicity, and on the other hand, the first dielectric layer 26 and the second dielectric layer 27 can make the microbead "a" to move more smoothly along the moving path and avoid breakage of the microbead "a" during movement.

In an embodiment, each of the first dielectric layer 26 and the second dielectric layer 27 may be, but is not limited to, a polytetrafluoroethylene coating.

Referring to FIG. 5, in an embodiment, the driving circuit 24 may be formed on the surface of the first cover plate 21 by metal etching or electroplating.

In an embodiment, the control electrodes 242 are integrated at an edge of the first cover plate 21. An electrical connection between the detection chip 2 and the connector 4 is realized by inserting the side of the first cover plate 21 with the control electrodes 242 into the connector 4.

Referring to FIGS. 3, 6 and 8, in an embodiment, the driving circuit 24 can be divided into a plurality of areas according to its different purposes, including a sample adding area "A", a reagent storage area "B", a plurality of PCR amplification areas "C", and a solution outlet area "D". The detection chip 2 corresponding to the sample adding area "A" defines a first opening 29. The first opening 29 corresponds to the sampling port 13 on the second cover plate 23. The microbead "a" is added in the sampling area "A" through the sampling port 13 and the first opening 29. The reagent storage area "B" is configured to store fluorescent reagents (such as fluorescent dyes or fluorescent probes). The microbead "a" undergoes PCR amplification reaction in the PCR amplification areas "C" to form an amplification product. The amplification product is mixed with a fluorescent reagent in the reagent storage area "B" to from the mixer microbead "b". The solution outlet area "D" is connected to the electrophoresis box 3. The solution outlet area "D" includes an outlet 51. The mixer microbead "b" enters the electrophoresis box 3 through the outlet 51. The number of PCR amplification areas "C" can be determined according to an actual requirement.

Referring to FIGS. 5 and 6, after the microbead "a" enters the sampling area "A", the microbead "a" moves to the PCR amplification areas "C" and undergoes the PCR amplification reaction to form the amplification product. When the PCR amplification reaction is completed, the amplification product is moved to the reagent storage area "B" and mixed with the fluorescent reagent to obtain the mixer microbead "b". The mixer microbead "b" then enters the electrophoresis box 3 through the outlet 51 and undergoes the electrophoretic process.

In order to mix the amplification product and the fluorescent reagent more evenly, the mixer microbead "b" is moved back and forth several times in the PCR amplification area "C. A mixing area (not shown) can also be set separately in the driving circuit 24 to mix the amplification product and the fluorescent reagent.

In an embodiment, the number of PCR amplification areas "C" is two. The temperatures of the two PCR amplification areas C are different, which realizes different stages of the PCR amplification reaction.

In an embodiment, the fluorescent reagent (such as a fluorescent dye or a DNA probe) is received in the reagent storage area "B" in advance. Thus, there is no need to add fluorescent reagent in the detection chip 2 separately.

In yet another embodiment, referring to FIG. 3. the fluorescent reagent can also be separately added into the detection chip 2 to mix with the amplification product. The detection chip 2 defines a reagent tank 7 corresponding to the reagent storage area "B", and the fluorescent reagent can be added into the reagent tank 7 during the PCR amplification reaction. The type of the fluorescent reagent can be selected according to an actual need, which can improve the flexibility of the PCR amplification reaction.

Referring to FIGS. 3, 5, and 6, the detection chip 2 further includes a heating unit 28. The heating unit 28 is disposed on a surface of the first cover plate 21 away from the channel 5 and / or on a surface of the second cover plate 23 away from the channel 5. The heating unit 28 corresponding to the PCR amplification areas "C" is connected to the connector 4. The heating unit 28 is used to heat the microbead "a" for the PCR amplification reaction.

In an embodiment, two heating units 28 disposed on a surface of the first cover plate 21 away from the channel 5 and on a surface of the second cover plate 23 away from the channel 5, respectively.

In an embodiment, the heating unit 28 is disposed on the surface of the second cover plate 23 away from the channel 5 through a thermally conductive adhesive layer (not shown).

Referring to FIG. 3 and 5. in an embodiment, the first cover plate 21 and the second cover plate 23 are glass plates. The spacer layer 22 is a frame, coated with adhesive on both sides, which is connected to edges of the first cover plate 21 and the second cover plate 23 to corporately define the channel 5. A volume of the channel 5 can be adjusted by changing a thickness of the spacer layer 22 according to an actual demand.

In an embodiment, silicone oil may be injected into the channel 5 after the detection chip 2 is assembled, and the microbead "a" is driven to move in the silicone oil.

Referring to FIG. 3, 4, 7, 8, and 11a, the electrophoresis box 3 includes an electrophoretic body 31, two electrophoretic electrodes 32 disposed on two ends of the electrophoretic body 31, a gel medium 33 disposed in the electrophoretic body 31, a liquid injection slot 34 disposed on an end of the gel medium 33, a connection unit 35, and a wetting liquid (not shown). Each electrophoresis electrode 32 is electrically connected to the connector 4. The electrophoresis box 3 further includes an inlet 37. The inlet 37 corresponds to the outlet 51. The connection unit 35 includes a first end 351 and a second end 352. The first end 351 extends into the channel 5 through the inlet 37 and the outlet 51. The second end 352 extends into the liquid injection slot 34. The mixture microbead "b" on the solution outlet area "D" may enter the liquid injection slot 34 of the gel medium 33 through the outlet 51, the inlet 37, and the connection unit 35, thereby undergoing electrophoretic process in the electrophoresis box 3.

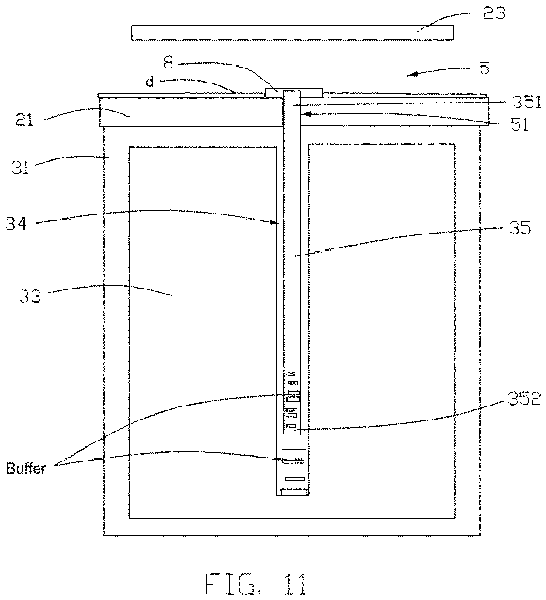

Referring to FIGS. 3, 4, 7, and 8, the electrophoretic body 31 is disposed on a side of the first cover plate 21 away from the second cover plate 23. The electrophoretic body 31 defines an electrophoresis groove 314. An opening of the electrophoresis groove 314 faces the first cover plate 21. The electrophoretic body 31 includes a transparent substrate 311 and a plurality of sidewalls 312 connected to the transparent substrate 311. The transparent substrate 311 and the sidewalls 312 cooperatively define the electrophoresis groove 314. Ends of the sidewalls 312 away from the transparent substrate 311 are connected to the surface of the first cover plate 21, thereby, the electrophoresis groove 314 is covered by the first cover plate 21. Referring to FIG. 11b, due to the first cover plate 21 being the cover plate of the electrophoresis groove 314, the outlet 51 and the inlet 37 coincide. With the above configuration, a height difference "ΔH₁" is defined between the silicone oil "d" in the detection chip 2 and the wetting liquid in the electrophoresis box 3. The height difference "ΔH₁" enables the mixture microbead "b" in the channel 5 to enter the electrophoresis box 3 smoothly. And the electrophoresis, box 3 can better connect to the detection chip 2, which is conducive to the transfer of the mixture microbead "b" from the detection chip 2 to the electrophoresis box 3. The nucleic acid detection kit 100 integrates with the detection chip 2 and the electrophoresis box 3, which has a small size, and is suitable for the nucleic acid detection device 100.

In an embodiment a sealing rubber ring (not shown) is disposed between the sidewalls 312 and the first cover plate 21 to improve the sealing performance of the electrophoresis box 3.

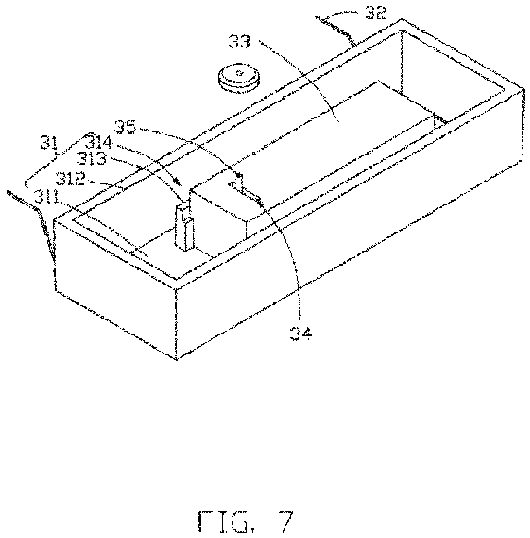

Referring to FIG. 7, the electrophoretic body 31 further includes a plurality of clamping portions 313 disposed on the transparent substrate 311. The clamping portions 313 fix the gel medium 33, and prevent the gel medium 33 from moving out of position, thereby guaranteeing the accuracy of the electrophoretic process.

In an embodiment, the gel medium 33 is substantially cubic.

In an embodiment, referring to FIG. 3, the transparent substrate 311 is a transparent glass plate, and the fluorescence image of the electrophoresis box 3 can be observed on a side of the transparent substrate 311 away from the gel medium 33.

In an embodiment, the number of the clamping portions 313 is four. Four clamping portions 313 are disposed outside of the gel medium 33 to fix the gel medium 33 in place.

Referring to FIG. 4, the first cover plate 21 defines a second opening 36. The second opening 36 corresponds to the electrophoresis box 3.

In an embodiment, a buffer is injected into the electrophoretic body 31 through the second opening 36.

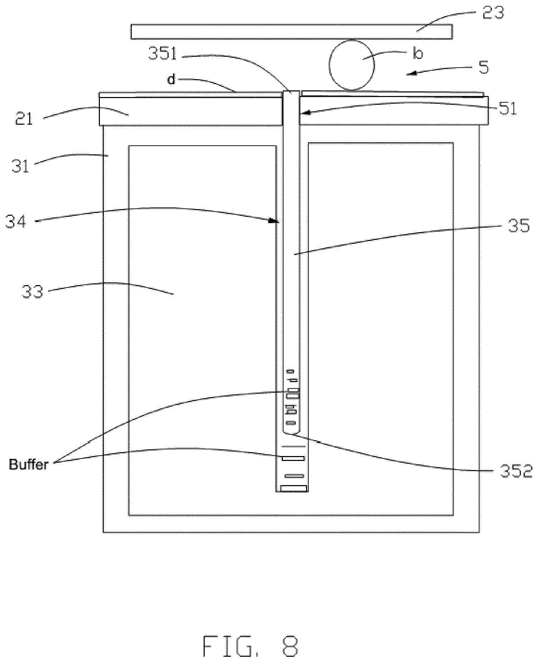

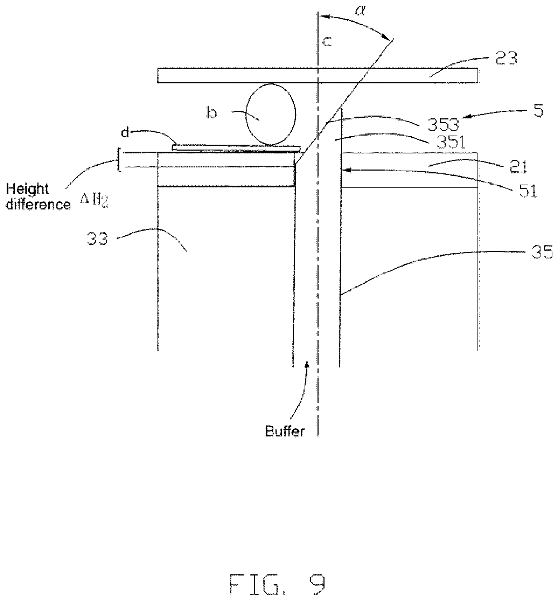

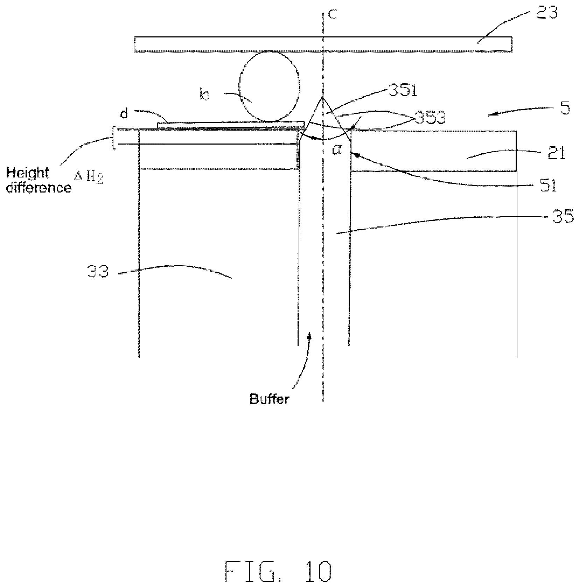

Referring to FIGS. 4, and 8 to 10, the first end 351 of the connection unit 35 extends into the channel 5 through the outlet 51. The outlet 51 is disposed on the first cover plate 21. Due to connection unit effect, the mixture microbead "b" enters the gel medium 33 through the connection unit 35. Referring to FIG. 8, in order to enable the mixture microbead "b" to enter the electrophoresis box 3 smoothly, the first end 351 includes a planar surface. The planar surface is flush with a surface of the silicone oil "d". Alternatively, referring to FIGS. 9 and 10, the first end 351 includes at least one inclined plane 353. The lowest point of the inclined plane 353 is lower than the bottom surface of the channel 5. There is a height difference "ΔH₂" between the lowest point of the inclined plane 353 and the bottom surface of the channel 5. The surface of the silicone oil "d" is in contact with the inclined plane 353, which can make the mixture microbead "b" smoothly enter the connection unit 35. During the assembly of the connection unit 35 and the detection chip 2, the connection unit 35 needs to be filled with buffer, and the buffer in the connection unit 35 needs to contact to the mixture microbead "b" in the solution outlet area "D" to form a continuous liquid flow and ensure that the mixture microbead "b" enters the electrophoresis box 3 smoothly.

In an embodiment, an angle between the inclined plane 353 and a central axis "C" of the connection unit 35 ranges from 45 degrees to 60 degrees. The inclined plane 352 in this angle can ensure the mixture microbead "b" enters the electrophoresis box 3 smoothly.

In an embodiment, referring to FIG. 9, liquid inlet 351 incudes one inclined plane 353. An angle between the inclined plane 353 and the central axis "C" of the connection unit 35 ranges from 45 degrees to 60 degrees.

In yet another embodiment, referring to FIG. 10, liquid inlet 351 incudes two inclined planes 353. An angle between each inclined plane 353 and the central axis "C" of the connection unit 35 ranges from 45 degrees to 60 degrees.

Referring to FIG. 4, one end of each electrophoresis electrode 32 extends into the electrophoretic body 31, and the other end of each electrophoresis electrode 32 is electrically connected to the connector 4.

Referring to FIGS. 3 and 8, due to the height difference "ΔH₁" between the silicone oil "d" in the detection chip 2 and the wetting liquid in the electrophoresis box 3, the wetting liquid will not enter the channel 5 through the connection unit 35 under normal and stable conditions. Due to the surface of the first end 351 of the connection unit 35 being flush with the surface of the silicone oil "d", the silicone oil "d" in the channel 5 will not enter the electrophoresis box 3 through the connection unit 35 under normal and stable conditions. However, the nucleic acid detection kit 100 may be tilted or be vibrated during transportation, and internal pressures of the detection chip 2 and the electrophoresis box 3 may change during transportation. The silicone oil "d" in the channel 5 and the wetting liquid in the electrophoresis box 3 may leak or the two may be mixed, which would affect the performance of the nucleic acid detection kit 100, and perhaps stop the nucleic acid detection kit 100 from functioning.

Referring to FIGS. 1 and 11a, the nucleic acid detection kit 100 further includes a barrier unit 8. The barrier unit 8 is disposed between the detection chip 2 and the electrophoresis box 3. The barrier unit 8 is used to prevent the leakage of the silicone oil "d" and the wetting liquid and prevent the silicone oil "d" and the wetting liquid from being mixed together. The barrier unit 8 may be in a first state and a second state. When the barrier unit 8 is in the first state, the barrier unit 8 is disposed on a first side of the outlet 51 close to the channel 5, so that the channel 5 of the detection chip 2 is disconnected from the electrophoresis box 3. When the barrier unit 8 is in the second state, the barrier unit 8 is away from the outlet 51, so that the channel 5 of the detection chip 2 is connected to the electrophoresis box 3. The barrier unit 8 changing from the first state to the second ensures that the silicone oil "d" in the channel 5 of the detection chip 2 and the wetting liquid in the electrophoresis box 3 will not leak or mix with each other.

The state of the barrier unit 8 can be changed according to an external condition such as temperature, pressure, or solvent. In an embodiment, the state of the barrier unit 8 can be changed according to a change of temperature.

In an embodiment, when a first temperature of the barrier unit 8 ranges from 0 °C to 35 °C, the barrier unit 8 is in the first state. The first state is a solid state. When a second temperature of the barrier unit 8 is higher than 35 °C, the barrier unit 8 is in the second state. The second state of the barrier unit 8 is a molten state,

In an embodiment, the barrier unit 8 covers the connection unit 35 and seals the first end 351 of the connection unit 35.

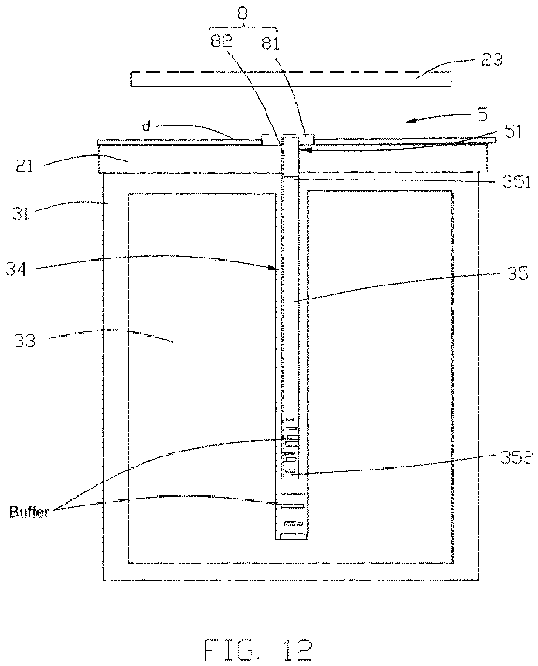

In yet another embodiment, referring to FIG. 12, in the first state, the barrier unit 8 includes a blocking portion 81 and a sealing portion 82. The blocking portion 81 is disposed in the channel 5 and covers the outlet 51 to seal the first end 351 of the outlet 51. The sealing portion 82 passes through the first end 351 and extends into the connection unit 35 to further strengthen the sealing effect. In an embodiment, the sealing portion 82 may extend below a surface of the first cover plate 21 away from the channel 5. Thus, the blocking portion 81 and the sealing portion 82 cooperatively form a T-shaped structure, achieving large attachment areas between the barrier unit 8 and an inner surface of the channel 5 and between the barrier unit 8 and the connection unit 35. The barrier unit 8 will not accidentally fall from the inner surface of the channel 5, realizing a better sealing effect.

In an embodiment, the barrier unit 8 may be made of a waxy substance with low-temperature formability and a solvent. The waxy substance is selected from a group consisting of paraffin, silicone wax, plant wax, white wax, and any combination thereof.

During the assembly of the nucleic acid detection kit 100, a polymer sealing material is mixed with the waxy substance and the solvent, and the polymer sealing material is coated on the inner surface of the channel 5 corresponding to the outlet 51, to form the barrier unit 8. Before using the nucleic acid detection kit 100, the barrier unit 8 is in the first state. A molecular formula of paraffin is CNH₂₍ₙ₊₂₎, wherein n=20-40, which is prepared by cold pressing, solvent dewaxing, and sweating from a waxy fraction of natural or man-made petroleum. The silicone wax is a waxy material grafted with organosiloxane functional groups (Si-O-Si) and other organic materials. The silicone wax has moderate hardness and is lipophilic, hydrophobic, smooth, soft, and bright. The plant wax may be fatty acid, monovalent, or divalent fatty alcohols, and an oily substance with high melting point. The oily substance with high melting point includes wood wax, soybean wax, palm wax, and rice bran wax. The white wax is usually mineral oil or liquid paraffin. The solvent can be a common solvent that can match the waxy substance.

In an embodiment, an amount of the waxy substance in the polymer sealing material ranges from 60 wt. % to 100 wt. %, and an amount of the solvent in the polymer sealing material ranges from 0 to 40 wt. %. The amounts of the waxy substance and of the solvent can be adjusted according to an actual demand.

In an embodiment, the waxy substance includes the paraffin or the silicone wax and the white wax. An amount of the paraffin or of the silicone wax in the waxy substance ranges from 80 wt. % to 99 wt. %, and an amount of the white wax in the waxy substance ranges from 1 wt. % to 2 wt. %. The barrier unit 8 made of the polymer sealing material ensures that the barrier unit 8 will not dissolve, will not fall from the inner surface of the channel 5, and will not deform during transportation of the nucleic acid detection kit 100. The barrier unit 8 can withstand a drastic change of an internal pressure in the channel 5, so as to ensure that the silicone oil "d" in the detection chip 2 and the wetting liquid in the electrophoresis box 3 will not leak or mix with each other.

A storage ambient temperature of the polymer sealing material is about 0 °C to 35 °C. When the nucleic acid detection kit 100 is not in use, the barrier unit 8 is in the first state. A melting temperature of the polymer sealing material is about 35 °C to 60 °C, Therefore, the barrier unit 8 will melt after the PCR amplification reaction in the nucleic acid detection kit 100 starts, and the barrier unit 8 is in the second state. Thus, the detection chip 2 is connected to the electrophoresis box 3 through the outlet 51 and the connection unit 35.

The polymer sealing material used to form the barrier structure 8 can separate the detection chip 2 from the electrophoresis box 3 without affecting a normal operation of the nucleic acid detection kit 100. The barrier unit 8 is in a molten state after being heated. Due to a difference in gravity from the silicone oil "d", a melting barrier unit 8 will float above or will settle below the silicone oil "d". Moreover, the melting barrier unit 8 may not react with the silicone oil "d". Due to the silicone oil "d" and the polymer sealing material having same structure such as C-H group or C-H-O-Si-O group, a mixture of the melting barrier unit 8 and the silicone oil "d" will not affect the PCR amplification reaction of nucleic acid detection kit 100. The wetting liquid in electrophoresis box 3 is mainly a water-based buffer, so the melting barrier unit 8 may not mix with the wetting liquid. Thus, the wetting liquid being mixed with the melting barrier unit 8 will not affect the electrophoretic process in electrophoresis box 3,

In other embodiments, the above configuration can further be used in other related biomedical calibrators or sensors to isolate two different liquids from leaking or mixing with each other.

FIG. 13 illustrates a nucleic acid detection device 200 according to the present disclosure. The nucleic acid detection device 200 includes a host 201, and the nucleic acid detection kit 100. A mounting groove 202 is disposed on the host 201, The nucleic acid detection kit 100 is detachably disposed in the mounting groove 202.

With the above configuration, the nucleic acid detection kit 100 can integrate the PCR amplification reaction and the electrophoretic process of nucleic acid into in a single piece of equipment. Thus, the nucleic acid detection kit 100 has a simple structure, which is portable, flexible, and convenient, and can be used at home. Due to the barrier unit being disposed between the detection chip 2 and the electrophoresis box 3, mixing of the silicone oil "d" in the channel 5 and the wetting liquid in the electrophoresis box 3 is prevented, and the reliability of the nucleic acid detection kit is improved.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including, the full extent established by the broad general meaning of the terms used in the claims.

## Claims

1. A nucleic acid detection kit (100), **characterized in that**, comprising:
a detection chip (2);
an electrophoresis box (3); and
a barrier unit (8);
the detection chip (2) comprises a first cover plate (21), a spacer layer (22), and a second cover plate (23), two opposite surfaces of the spacer layer (22) are respectively in contact with the first cover plate (21) and the second cover plate (23), the first cover plate (21), the spacer layer (22), and the second cover plate (23) cooperatively define a channel (5), the first cover plate (21) defines an outlet (51), the outlet (51) is connected to the channel (5);
the barrier unit (8) is in a first state or a second state, the barrier unit (8) is disposed on a side of the outlet (51) close to the channel (5) when the barrier unit (8) is in the first state, so that the channel (5) is disconnected from the electrophoresis box (3), the barrier unit (8) is away from the outlet (51) when the barrier unit (8) is in the second state, so that the channel (5) is connected to the electrophoresis box (3).

2. The nucleic acid detection kit (100) of claim 1, **characterized in that**, the electrophoresis box (3) comprises a connection unit (35), the channel (5) is connected to the electrophoresis box (3) through the connection unit (35), the connection unit (35) comprises a first end (351), the first end (351) extends into the channel (5) through the outlet (51), the barrier unit (8) covers the first end (351) when the barrier unit (8) is in the first state.

3. The nucleic acid detection kit (100) of claim 2, **characterized in that**, the barrier unit (8) comprises a blocking portion (81) and a sealing portion (82), when the barrier unit (8) is in the first state, the blocking portion (18) is disposed in the channel (5), the sealing portion (82) passes through the first end (351) and extends into the connection unit (35).

4. The nucleic acid detection kit (100) of claim 1, **characterized in that**, the barrier unit (8) is in the first state in a temperature ranging from 0 °C to 35 °C, the first state is a solid state;
the barrier unit (8) is in the second state in a temperature higher than 35 °C, the second state is a molten state.

5. The nucleic acid detection kit (100) of claim 4, **characterized in that**, the barrier unit (8) is a waxy substance selected from a group consisting of paraffin, silicone wax, plant wax, white wax, and any combination thereof.

6. The nucleic acid detection kit (100) of claim 5, **characterized in that**, an amount of the waxy substance in the barrier unit (8) is larger than or equals to 60 wt. %.

7. The nucleic acid detection kit (100) of claim 2, **characterized in that**, the electrophoresis box (3) further comprises an electrophoretic body (31), a gel medium (32) disposed in the electrophoretic body (31), a liquid injection slot (34) disposed on an end of the gel medium (32), the connection unit (35) further comprises a second end (352) away from the first end (351), the second end (352) extends into the liquid injection slot (34).

8. The nucleic acid detection kit (100) of claim 7, **characterized in that**, the electrophoretic body (31) defines an electrophoretic groove (314), the first cover plate (21) is disposed on an opening of the electrophoretic groove (314).

9. The nucleic acid detection kit (100) of claim 2, **characterized in that**, the first end (351) comprises a planar surface or at least one inclined plane (353), the planar surface is parallel to an extension direction of the channel (5), and an angle between each of the at least one inclined plane (353) and a central axis (C) of the connection unit (35) ranges from 45 degrees to 60 degrees.

10. A nucleic acid detection device (200), **characterized in that**, comprising:
a nucleic acid detection kit (100) of any one of claims 1 to 9; and
a host (201), a mounting groove (202) is disposed on the host (201), the nucleic acid detection kit (100) is detachably disposed in the mounting groove (202).
